# EUROPÄISCHE PATENTSCHRIFT

(11) **EP 1 002 206 B1**
(45) Veröffentlichungstag und Bekanntmachung des Hinweises auf die Patenterteilung: **17.11.2004**
(21) Anmeldenummer: 98945144.8
(22) Anmeldetag: 04.08.1998
(51) Int. Cl.: F16K 39/02

(54) **SCHALTVENTIL**
CONTROL VALVE
SOUPAPE DE COMMANDE

(30) Priorität: 04.08.1997 DE 29713878 U
(43) Veröffentlichungstag der Anmeldung: 24.05.2000
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: PCT/EP1998/004858
(87) Internationale Veröffentlichungsnummer: WO 1999/008031

(56) Entgegenhaltungen:
- DE-A- 2 113 602
- DE-A- 3 910 765
- FR-A- 2 230 907
- GB-A- 2 017 266
- US-A- 5 386 965

## Beschreibung

Die Erfindung betrifft ein Schaltventil mit einem in einem Ventilkörper gelagerten Ventilelement, das in Schließstellung an einem Ventilsitz zur Sperrung eines im Ventilkörper ausgebildeten Fluiddurchlasses anliegt und durch Axialbewegung einer Betätigungsstange in Offenstellung bewegbar ist, wie im Oberbegriff des Anspruches definiert.

Ein derartiges Schaltventil ist beispielsweise aus der FR-A-2.230.907 oder ähnlich aus der FR-A-1.378.578 bekannt. Das dort verwendete Schaltventil dient insbesondere zum Freigeben bzw. Schließen von Sprühanlagen. Die Schließstellung wird hierbei durch Betätigung eines Handhebels erreicht, der auf eine Betätigungsstange (Stößel) wirkt, an dessen vorderem Ende ein kegelförmiges Ventilelement angeordnet ist. Das Ventilelement ist dabei von wenigstens einer Druckfeder auf den Ventilsitz zur Sperrung des Fluiddurchlasses gedrückt. Um in dieser Schließstellung eine hohe Schließkraft des Ventils zu ermöglichen, werden hierbei üblicherweise relativ starke Druckfedern verwendet, die jedoch für das Umschalten des Schaltventils in die Offen- oder Freigabestellung relativ hohe Betätigungskräfte erfordern. So wird in der genannten Druckschrift ein mehrteiliger Betätigungshebel mit entsprechender Kraftübersetzung vorgeschlagen, wobei jedoch die Bauweise sehr aufwendig wird. Zudem ist diese übliche Bauweise mit mehreren Übersetzungshebeln verschleißbehaftet, insbesondere bei häufigen Umschaltvorgängen. Darüberhinaus wird hierdurch das Bauvolumen eines derartigen Schaltventils in nachteiliger Weise erhöht.

Demzufolge liegt der Erfindung die Aufgabe zugrunde, die vorstehenden Nachteile zu vermeiden und ein Schaltventil zu schaffen, das eine hohe Schließkraft bei geringer Betätigungskraft aufweist, sowie eine einfache und kompakte Bauweise ermöglicht.

Diese Aufgabe wird gelöst durch ein Schaltventil mit den Merkmalen des Anspruches 1. Bevorzugte Ausgestaltungen sind Gegenstand der Unteransprüche.

Durch die Ausbildung einer ringförmigen Kolbenfläche an der Betätigungsstange und einer Ausgleichsleitung, die mit dem Fluiddurchlaß in Verbindung steht, wird erreicht, daß in der Fluidleitung anstehender Druck auf die Rückseite des Ventilelementes umgeleitet wird und dort durch Beaufschlagung der ringförmigen Kolbenfläche die Schließkraft des Ventilelementes erhöht. Dadurch wird eine "Ausbalancierung" in Anpassung an den jeweils anliegenden Druck erreicht. Es sei darauf hingewiesen, daß im Flächenvergleich zu der Dichtfläche des Ventilelements die ringförmige Kolbenfläche eine größere effektive Kolbenfläche aufweist, so daß das Ventilelement immer in Richtung der Schließstellung beaufschlagt wird.

Dies ermöglicht in bevorzugter Weise die Verwendung einer relativ schwachen Druckfeder, da die erforderliche Schließkraft insbesondere durch Wirkung des Fluids an der ringförmigen Kolbenfläche erreicht wird. Somit kann auch ein relativ kurzer Handhebel zur Betätigung des Schaltventils verwendet werden bzw. entsprechend kompakte Spindel- bzw. Exzenterantriebe oder Pneumatikzylinder. Hierdurch ergibt sich insgesamt eine besonders kompakte Bauweise.

In vorteilhafter Ausführung ist die Kolbenfläche einstückig mit der Betätigungsstange für das Ventilelement ausgebildet, nämlich als einfaches Drehteil, an dem ein Ringbund als Kolbenfläche angeformt ist. Zudem kann diese ringförmige Kolbenfläche zugleich als Abstützfläche für die Druckfeder ausgebildet sein.

In besonders einfacher Bauweise wird die Ausgleichsleitung zentral durch die Betätigungsstange hindurchgeführt, beispielsweise in Form einer mittigen Bohrung und einer sich daran anschließenden Querkanalbohrung. Hierdurch ergibt sich eine besonders einfache Fertigung.

Nachfolgend werden mehrere Ausführungsbeispiele des Schaltventils anhand der Zeichnungen beschrieben und erläutert. Hierbei zeigen:
- Fig. 1: ein Schaltventil in Offenstellung;
- Fig. 2: das Schaltventil gemäß Fig. 1 in Schließstellung;
- Fig. 3: das Schaltventil gemäß Fig. 1 und 2 mit einer pneumatischen Betätigung; und
- Fig. 4: eine Ausführung mit einer Hebelbetätigung des Schaltventils.

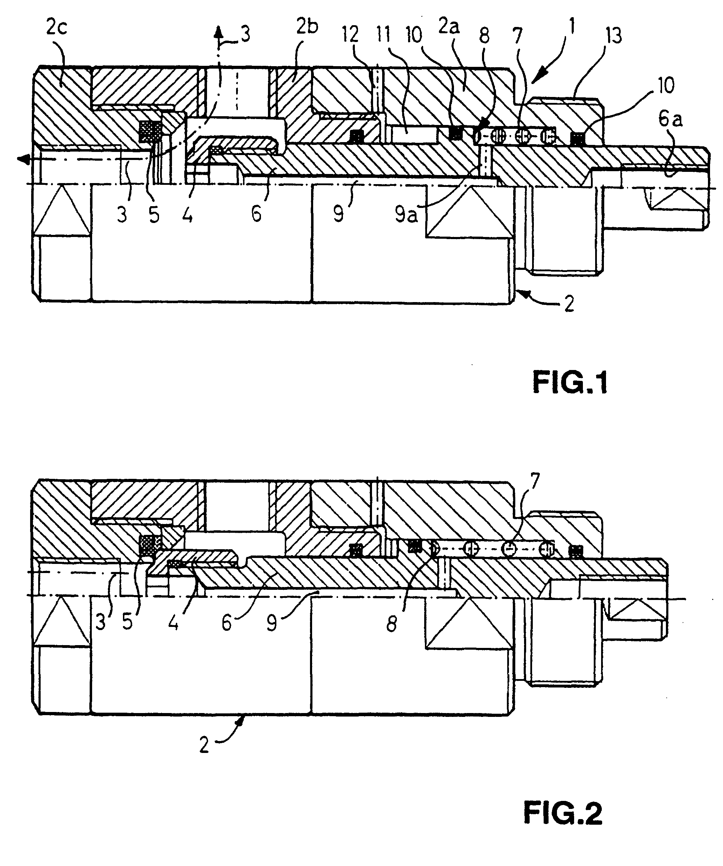

In Fig. 1 ist ein Schaltventil 1 in Offenstellung dargestellt, wobei innerhalb eines im wesentlichen zylindrischen Ventilkörpers 2 ein Ventilelement 4 von einem Ventilsitz 5 beabstandet ist, so daß hierdurch ein strichpunktiert eingezeichneter Fluiddurchlaß ermöglicht wird. Der Ventilkörper 2 ist hier aus drei Einzelteilen 2a, 2b und 2c aufgebaut und zu einer zylindrischen Einheit verschraubt. In dem mittigen Ventilkörperteil 2b ist hierbei der Fluideinlaß ausgebildet, während in dem Ventilkörperteil 2c der Fluidauslaß vorgesehen ist. Die Anordnung kann jedoch auch umgekehrt sein, wie dies mit dem Doppelpfeil angedeutet ist. In dem Ventilkörperteil 2c ist des weiteren der Ventilsitz 5 durch Einsatz einer entsprechenden Dichtung ausgebildet. Diese Bauweise mit Verschraubung zwischen den Ventilkörperteilen 2b und 2c besitzt den Vorteil, daß hierdurch der Ventilsitz 5 im Wartungsfalle schnell ausgetauscht werden kann. Ebenso können hierdurch verschiedene Anschlüsse, hier in Form eines Innengewindes, geschaffen werden.

Das hülsenförmige Ventilelement 4 ist hier an der Spitze einer Betätigungsstange 6 aufgeschraubt, so daß das Ventilelement 4 ebenfalls schnell austauschbar ist, sowie auch gegenüber der Betätigungsstange 6 aus einem verschleißfesteren Werkstoff gebildet sein kann.

Die Betätigungsstange 6 ist einerseits in dem mittleren Ventilkörperteil 2b und andererseits in einem betätigungsseitigen Ventilkörperteil 2a geführt. Die Betätigungsstange 6 ist dabei bevorzugt von einer Druckfeder 7 in Richtung auf die Schließstellung, also der Anlage des Ventilelementes 4 an dem Ventilsitz 5, beaufschlagt. Die Druckfeder 7 greift hierbei einerseits an dem Ventilkörperteil 2a und andererseits an einem ringförmigen Bund an, der zugleich eine Kolbenfläche 8 bildet. Die Kolbenfläche 8 wird neuerungsgemäß über eine Ausgleichsleitung 9 mit Fluid beaufschlagt. Bestandteil der Ausgleichsleitung 9 sind auch eine oder mehrere Querbohrungen 9a in der Betätigungsstange 6.

In Fig. 2 ist die Schließstellung des Schaltventils 1 dargestellt. Wenn somit im Bereich des Ventilkörperteils 2c noch ein Druck vorliegt, wird über die Ausgleichsleitung 9 der Raum, in dem sich die Druckfeder 7 befindet und damit die Kolbenfläche 8, beaufschlagt, so daß die Betätigungsstange 6 stärker in Richtung des Ventilsitzes 5 gedrückt wird. Hierdurch wird die Schließkraft in Schließstellung erhöht. Der somit gebildete Druckraum, in dem sich die Druckfeder 7 befindet, ist dabei über mehrere Dichtungen 10 gegenüber der Außenseite abgedichtet.

Zwischen den Ventilkörperteilen 2a und 2b ist zudem ein Ausgleichsraum 11 vorgesehen, der die Axialbewegung der Betätigungsstange 6 ermöglicht. Dieser Ausgleichsraum 11 ist hier mit einer Entlüftungsbohrung 12 im Ventilkörper 2 verbunden, so daß sich hierdurch kein Druck aufbauen kann, der die Axialbewegung der Betätigungsstange 6 beeinträchtigen könnte. Dieser Ringraum 11 kann jedoch zur Ermöglichung oder Unterstützung der Axialbewegung in die Offenstellung auch druckbeaufschlagt sein, indem beispielsweise an die Bohrung 12 eine schaltbare Druckleitung angeschlossen ist. Weiterhin ist an dem betätigungsseitigen Ende des Ventilkörperteils 2a ein Gewinde 13 (oder ähnliches Befestigungselement) vorgesehen, an das in Verbindung mit einem Gewinde 6a an der Betätigungsstange 6 ein Schaltelement 20 bzw. 30 anschließbar ist, wie dies nachfolgend beschrieben wird.

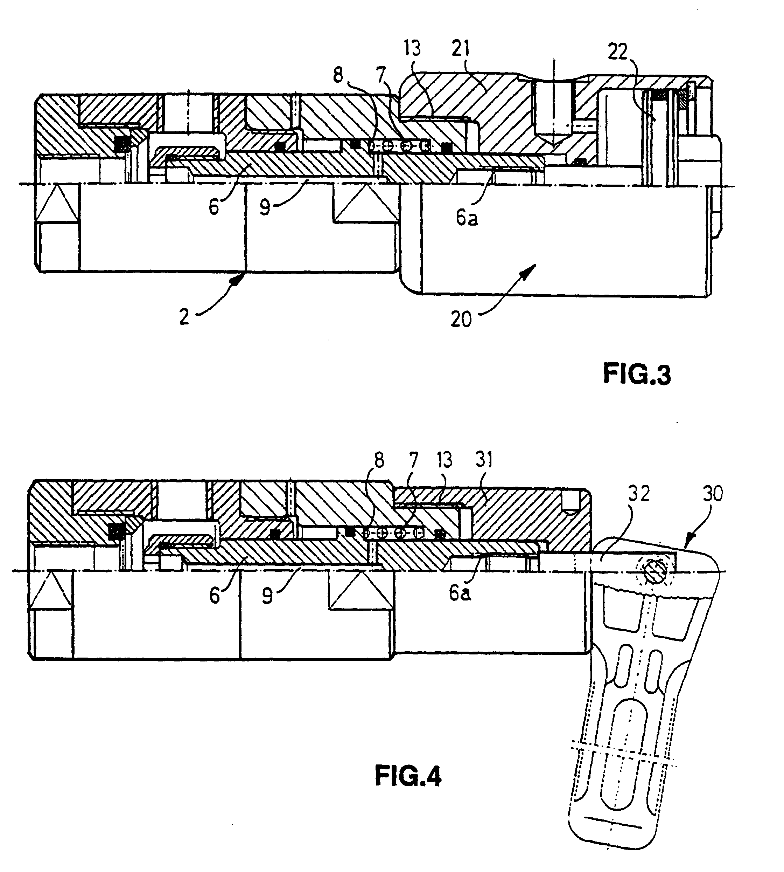

In Fig. 3 ist hierbei an den Ventilkörper 2 ein Pneumatikzylinder 20 angeschlossen, nämlich mit einem Außenteil 21 an dem Gewinde 13 und einem Kolbenteil 22 an dem Gewinde 6a der Betätigungsstange 6. Bei Zuführung von Druckluft (bzw. in der Ausführung als Hydraulikzylinder auch von Drucköl) wird das Kolbenteil 22 nach rechts verschoben, so daß das Schaltventil 1 die Offenstellung gemäß Fig. 1 einnimmt. Bei Druckentlastung wird das Druckteil 22 durch die Kuppelung mit der Betätigungsstange 6 mit der Druckfeder 7 nach links in die Schließstellung gemäß Fig. 2 gedrückt. Beachtenswert ist hierbei insbesondere die einfache Anschließbarkeit des Pneumatikzylinders 20 und die kompakte Bauweise.

In Fig. 4 ist eine weitere Ausführung eines Schaltelementes in Form eines Handhebels 30 gezeigt. Hierbei erfolgt wiederum der Anschluß an den Ventilkörper 2 mittels des Gewindes 13, an dem eine Abstützhülse 31 aufschraubbar ist. Der Handhebel 30 ist hierbei an einer Hebelstange 32 gelagert, die in das Gewinde 6a der Betätigungsstange 6 eingeschraubt ist. Der Handhebel 30 kann jedoch auch ohne Zwischenschaltung der Abstützhülse 31 befestigt sein. Ebenso kann aufgrund der "druckbalancierten" Ausführung und der damit erreichten geringen Betätigungskraft ein Handgriff zum Verschieben der Betätigungsstange 6 vorgesehen sein. In der Ausführung als Absperrventil, z.B. für eine Gasflasche, kann die Betätigungsstange 6 auch als Spindel ausgebildet sein, die mittels eines Handrades (anstatt des Handhebels 20) drehbar und damit in die Schließ-/Offenstellung bewegbar ist.

Somit ergibt sich hier eine besonders einfache Ankuppelung und eine kompakte Bauweise. Anstatt der hier dargestellten Schaltelemente in Form eines Pneumatikzylinders 20 oder eines Handhebels 30 kann natürlich auch ein in die Betätigungsstange 6 eingreifender Exzenterhebel (z. B. gemäß der EP-A-0 340 879) oder ein Hydraulikzylinder verwendet werden, obwohl aufgrund der geringen Betätigungskraft des Schaltventils 1 eine hydraulische Betätigung grundsätzlich nicht erforderlich ist. Dennoch kann diese Art der Betätigung zweckmäßig sein, insbesondere wenn durch den Fluiddurchlaß 3 Hydrauliköl gefördert wird, so daß dieses Medium dann in einfacher Weise auch für die Schaltung des Schaltventils 1 herangezogen werden kann. Zudem kann durch die Betätigungsstange 6 zugleich mit dem Schließen des Ventilelements 4 auch ein Entlüftungsventil (ähnlich der Entlüftungsbohrung 12 in Fig. 1) oder zumindest ein weiteres Ventil mit geringer Verzögerung in Folgeschaltung betätigt werden.

## Patentansprüche

1. Schaltventil mit einem in einem Ventilkörper (2) gelagerten Ventilelement (4), das in Schließstellung an einem Ventilsitz (5) zur Sperrung eines im Ventilkörper ausgebildeten Fluiddurchlasses (3) anliegt und durch Axialbewegung einer Betätigungsstange (6) in Offenstellung bewegbar ist, wobei
an der Betätigungsstange (6) eine ringförmige Kolbenfläche (8) vorgesehen ist, die über eine Ausgleichsleitung (9) mit dem Fluiddurchlaß (3) in Verbindung steht,
**dadurch gekennzeichnet, daß**
das Ventilelement (4) hülsen förmig ist und an der Spitze der Betätigungsstange (6) aufschraubbar ist.

2. Schaltventil nach Anspruch 1,
**dadurch gekennzeichnet, daß**
die Kolbenfläche (8) einstückig mit der Betätigungsstange (6) ausgebildet ist.

3. Schaltventil nach Anspruch 1 oder 2,
**dadurch gekennzeichnet, daß**
die Kolbenfläche (8) als eine Abstützfläche einer Druckfeder (7) ausgebildet ist.

4. Schaltventil nach einem der Ansprüche 1 bis 3,
**dadurch gekennzeichnet, daß**
die Ausgleichsleitung (9) zentral in der Betätigungsstange (6) verläuft und über wenigstens einen Querkanal (9) zur Kolbenfläche (8) geführt ist.

5. Schaltventil nach einem der Ansprüche 1 bis 3,
**dadurch gekennzeichnet, daß**
die Betätigungsstange (6) unter Bildung eines zentralen Fluiddurchlasses (3) rohrförmig ausgebildet ist.

6. Schaltventil nach einem der Ansprüche 1 bis 5,
**dadurch gekennzeichnet, daß**
die Betätigungsstange (6) von einem Handhebel (30) oder in der Ausführung als Spindel von einem Handrad betätigbar ist.

7. Schaltventil nach einem der Ansprüche, 1 bis 5,
**dadurch gekennzeichnet, daß**
die Betätigungsstange (6) von einem Pneumatikzylinder (20) oder einem Exzenterhebel betätigbar ist.

8. Schaltventil nach einem der Ansprüche 1 bis 7,
**dadurch gekennzeichnet, daß**
die Kolbenfläche (8) eine grössere wirksame Druckfläche als die Dichtfläche am Ventilelement (4)/Ventilsitz (5) aufweist und bevorzugt mit wenigstens einer Dichtung (10) gegenüber dem Ventilkörper (2) abgedichtet geführt ist.

9. Schaltventil nach einem der Ansprüche 1 bis 8,
**dadurch gekennzeichnet, daß**
im Ventilgehäuse (2) wenigstens eine nach außen führende Entlüftungsbohrung (12) vorgesehen ist, die bevorzugt mit einem von einer Druckstange (50) betätigbaren Ventil verschlossen ist.

10. Schaltventil nach einem der Ansprüche 1 bis 9,
**dadurch gekennzeichnet, daß**
der Ventilkörper (2) aus mehreren ineinanderschraubbaren Ventilkörperteilen (2a, 2b, 2c) gebildet ist.

11. Schaltventil nach Anspruch 10,
**dadurch gekennzeichnet, daß**
der Ventilsitz (5) im Ventilkörperteil (2c) als O-Ring und/oder PTFE-Ring ausgebildet ist.

12. Schaltventil nach Anspruch 10 oder 11,
**dadurch gekennzeichnet, daß**
an dem betätigungsseitigen Ventilkörperteil (2a) ein Gewinde (13) zur Befestigung eines Schaltelementes (Pneumatikzylinder 20, Handhebel 30) vorgesehen ist.

## Claims

1. A control valve with a valve element (4) mounted in a valve body (2), which bears in the closed position on a valve seat (5) to block a fluid passage (3) formed in the valve body and can be moved by axial movement of an actuating rod (6) into the open position, wherein an annular piston surface (8) is provided on the actuating rod (6) which is in communication with the fluid passage (3) through an equalizing line (9),
**characterized in that**
the valve element (4) exhibits the shape of a sleeve and can be screwed onto the top of the actuating rod (6).

2. A control valve according to claim 1, **characterized in that** the piston surface (8) is formed in one piece with the actuating rod (6).

3. A control valve according to claim 1 or 2, **characterized in that** the piston surface (8) is formed as an abutment surface for a compression spring (7).

4. A control valve according to any of claims 1 to 3, **characterized in that** the equalizing line (9) runs centrally in the actuating rod (6) and is led to the piston surface (8) through at least one transverse channel (9).

5. A control valve according to any of claims 1 to 3, **characterized in that** the actuating rod (6) is of tubular form, so as to form a central fluid passage (3).

6. A control valve according to any of claims 1 to 5, **characterized in that** the actuating rod (6) can be actuated by a hand lever (30) or, when designed as a spindle, by a handwheel.

7. A control valve according to any of claims 1 to 5, **characterized in that** the actuating rod (6) can be operated from a pneumatic cylinder (20) or an eccentric lever.

8. A control valve according to any of claims 1 to 7, **characterized in that** the piston surface (8) has a greater effective pressure area than the sealing surface on the valve element (4)/valve seat (5) and is led preferably sealed relative to the valve body (2) by at least one seal (10).

9. A control valve according to any of claims 1 to 8, **characterized in that** at least one venting bore (12) leading to the exterior is provided in the valve housing (2) and is preferably closed by a valve adapted to be actuated by a push rod (50).

10. A control valve according to any of claims 1 to 9, **characterized in that** the valve body (2) is formed from a plurality of valve body parts (2a, 2b, 2c) which are adapted to screw into one another.

11. A control valve according to claim 10, **characterized in that** the valve seat (5) in the valve body part (2c) is formed as an O-ring and/or PTFE ring.

12. A control valve according to claim 10 or 11, **characterized in that** a thread (13) is provided on the end of the valve body part (2a) at the operating end for fixing a switching device (pneumatic cylinder 20, hand lever 30).

## Revendications

1. Soupape de commande ou de commutation comprenant un élément ou opercule de soupape (4), monté dans un corps de soupape (2) et qui, en position de fermeture, s'applique contre un siège de soupape (5), pour bloquer un passage de fluide (3) réalisé dans le corps de soupape et déplaçable en position d'ouverture par un déplacement axial d'une tige d'actionnement (6), une face de piston (8) annulaire, reliée au passage de fluide (3) par une conduite d'équilibrage (9), étant prévue sur la tige d'actionnement (6) **caractérisée en ce que** l'élément de soupape ou opercule (4) est en forme de douille et peut être vissé sur la pointe de la tige d'actionnement (6).

2. Soupape de commande ou de commutation selon la revendication 1, **caractérisée en ce que** la surface de piston (8) est réalisée d'une seule pièce avec la tige d'actionnement (6).

3. Soupape de commande ou de commutation selon la revendication 1 ou 2, **caractérisée en ce que** la surface de piston (8) est réalisée sous forme de surface d'appui d'un ressort de compression (7).

4. Soupape de commande ou de commutation selon l'une des revendications 1 à 3, **caractérisée en ce que** la conduite d'équilibrage (9) s'étend centralement dans la tige d'actionnement (6) et est guidée, en passant par au moins un canal transversal (9a), vers la surface de piston (8).

5. Soupape de commande ou de commutation selon l'une des revendications 1 à 3, **caractérisée en ce que** la tige d'actionnement (6) est de forme tubulaire, en formant un passage de fluide (3) central.

6. Soupape de commande ou de commutation selon l'une des revendications 1 à 5, **caractérisée en ce que** la tige d'actionnement (6) est actionnable par un levier à main (30), ou par un volant dans le cas où elle est réalisée sous forme de broche.

7. Soupape de commande ou de commutation selon l'une des revendications 1 à 5, **caractérisée en ce que** la tige d'actionnement (6) est actionnable par un vérin pneumatique (20) ou un levier d'excentrique.

8. Soupape de commande ou de commutation selon l'une des revendications 1 à 7, **caractérisée en ce que** la surface de piston (8) présente une surface de pression efficace plus grande que la surface d'étanchéité réalisée sur l'élément de soupape (4)/siège de soupape (5) et, de préférence, est guidée de façon isolée hermétiquement par rapport au corps de soupape (5), à l'aide d'au moins un joint d'étanchéité (10).

9. Soupape de commande ou de commutation selon l'une des revendications 1 à 8, **caractérisée en ce que**, dans le carter de soupape (2), est prévu au moins un perçage de désaération (12) allant vers l'extérieur, fermé, de préférence, par une soupape, actionnable par une tige de pression (50).

10. Soupape de commande ou de commutation selon l'une des revendications 1 à 9, **caractérisée en ce que** le corps de soupape (2) est formé d'une pluralité de parties de corps de soupape (2a,2b,2c), vissables les unes dans les autres.

11. Soupape de commande ou de commutation selon la revendication 10, **caractérisée en ce que** le siège de soupape (5), dans la partie de corps de soupape (2c), est réalisé sous la forme d'élément torique et/ou de bague en PTFE.

12. Soupape de commande ou de commutation selon la revendications 10 ou 11, **caractérisée en ce que**, sur la partie de corps de soupape (2a), côté actionnement, est prévu un filetage (13), pour fixation d'un élément de commutation (vérin pneumatique 20, levier à main 30).
